# EUROPEAN PATENT SPECIFICATION

(11) **EP 4 147 281 B1**
(45) Date of publication and mention of the grant of the patent: **09.04.2025**
(21) Application number: 21723965.6
(22) Date of filing: 04.05.2021
(51) Int. Cl.: H01F 41/04, H01F 6/06, G21B 1/05, G21B 1/11

(54) **A METHOD OF MANUFACTURING A HIGH TEMPERATURE SUPERCONDUCTOR FIELD COIL AND A HIGH TEMPERATURE SUPERCONDUCTOR FIELD COIL**
EIN VERFAHREN ZUR HERSTELLUNG EINER HOCHTEMPERATUR-SUPRALEITER-FELDSPULE UND EINEHOCHTEMPERATUR-SUPRALEITER-FELDSPULE
UN PROCÉDÉ DE FABRICATION D'UNE BOBINE DE CHAMP SUPRACONDUCTRICE À HAUTE TEMPÉRATURE ET UNE BOBINE DE CHAMP SUPRACONDUCTRICE À HAUTE TEMPÉRATURE

(30) Priority: 04.05.2020 GB 202006576
(43) Date of publication of application: 15.03.2023
(60) Divisional application: 25160901.2
(73) Proprietor: Tokamak Energy Ltd, Abingdon, Oxfordshire OX14 4SD (GB)
(72) Inventor: BRITTLES, Greg, Milton, Oxfordshire OX14 4SD (GB); LANGTRY, Tony, Milton, Oxfordshire OX14 4SD (GB); BATEMAN, Rod, Milton, Oxfordshire OX14 4SD (GB); SLADE, Robert, Milton, Oxfordshire OX14 4SD (GB); VAN NUGTEREN, Bas, Milton, Oxfordshire OX14 4SD (GB)
(74) Representative: Marks & Clerk LLP
(86) International application number: PCT/EP2021/061756
(87) International publication number: WO 2021/224279

(56) References cited:
- EP-A1- 4 078 630
- WO-A1-2019/150123
- WO-A1-2020/104807
- US-A1- 2002 144 838
- US-A1- 2006 073 979
- US-A1- 2012 065 074
- DUAN YUJIE ET AL: "Effect of substrate thickness on interfacial adhesive strength and thermal residual stress of second-generation high-temperature superconducting tape using peel test modeling", CRYOGENICS, ELSEVIER, KIDLINGTON, GB, vol. 94, 18 July 2018 (2018-07-18), pages 89 - 94, XP085452647, ISSN: 0011-2275, DOI: 10.1016/J.CRYOGENICS.2018.07.008

## Description

### Technical Field

The present invention relates to a method of manufacturing High Temperature Superconductor (HTS) field coils and to HTS field coils.

### Background

Superconducting materials are typically divided into "high temperature superconductors" (HTS) and "low temperature superconductors" (LTS). LTS materials, such as Nb and NbTi, are metals or metal alloys whose superconductivity can be described by BCS theory. All low temperature superconductors have a critical temperature (the temperature above which the material cannot be superconducting even in zero magnetic field) below about 30K. The behaviour of HTS material is not described by BCS theory, and such materials may have critical temperatures above about 30 K (though it should be noted that it is the physical differences in composition and superconducting operation, rather than the critical temperature, which define HTS and LTS material). The most commonly used HTS are "cuprate superconductors" - ceramics based on cuprates (compounds containing a copper oxide group), such as BSCCO, or ReBCO (where Re is a rare earth element, commonly Y or Gd). Other HTS materials include iron pnictides (e.g. FeAs and FeSe) and magnesium diboride (MgB₂).

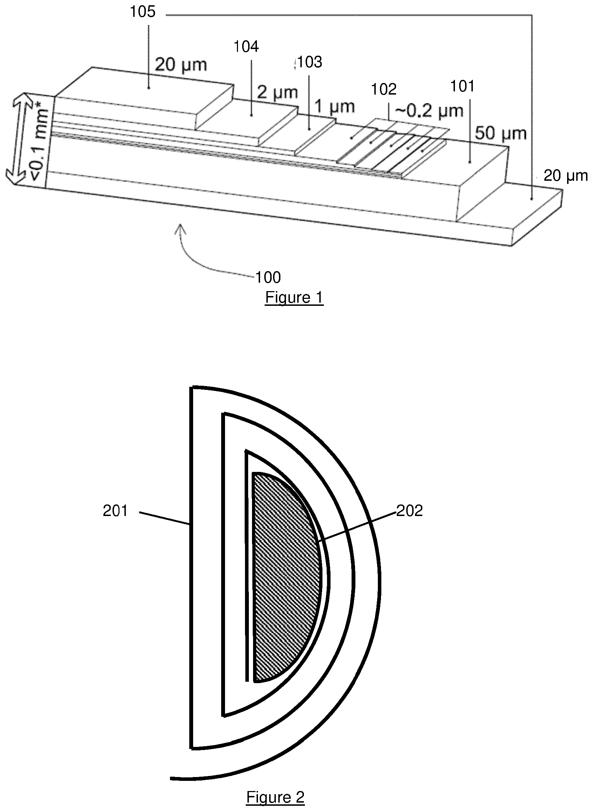

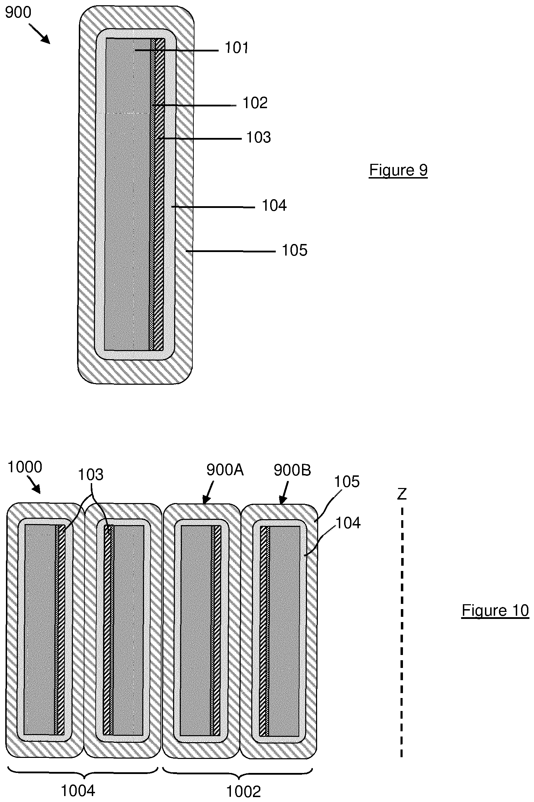

ReBCO is typically manufactured as tapes, with a structure as shown in Figure 1. Such tape 100 is generally approximately 100 microns thick, and includes a substrate 101 (typically electropolished nickel-molybdenum alloy such as Hastelloy^{™}, approximately 50 microns thick), on which is deposited by Ion Beam Assisted Deposition (IBAD), magnetron sputtering, or another suitable technique a series of buffer layers known as the buffer stack 102, of approximate thickness 0.2 microns. An epitaxial ReBCO-HTS layer 103 (deposited by Metal Oxide Chemical Vapour Deposition (MOCVD) or another suitable technique) overlays the buffer stack, and is typically 1 micrometer thick. A 1-2 micrometer silver layer 104 is deposited on the HTS layer by sputtering or another suitable technique, and a copper stabilizer layer 105 is deposited on the tape by electroplating or another suitable technique. The silver layer 104 and copper stabilizer layer 105 are deposited on the sides of the tape 100 and the substrate 101 too, so that these layers extend continuously around the perimeter of the tape 100, thereby allowing an electrical connection to be made to the ReBCO-HTS layer 103 from either face of the tape 100. These layers 104, 105 may therefore also be referred to as "cladding". Typically, the silver cladding has a uniform thickness on both the sides and edges of the tape of around 1-2 microns. Providing a silver layer 104 between the HTS layer 103 and the copper layer 105 prevents the HTS material contacting the copper, which might lead to the HTS material becoming poisoned by the copper. The parts of the silver layer 104 and copper stabilizer layer 105 on the sides of the tape 100 are not shown in Figure 1 for clarity, but are shown in the cross section view provided in Figure 9. Figure 1 also does not show the silver layer 104 extending beneath the substrate 101, as is normally the case (see Figure 9, for example). The silver layer 104 makes a low resistivity electrical interface to, and an hermetic protective seal around, the ReBCO layer 103, whilst the copper layer 105 enables external connections to be made to the tape (e.g. permits soldering) and provides a parallel conductive path for electrical stabilisation.

The substrate 101 provides a mechanical backbone that can be fed through the manufacturing line and permit growth of subsequent layers. The buffer stack 102 provides a biaxially textured crystalline template upon which to grow the HTS layer, and prevents chemical diffusion of elements from the substrate to the HTS which damage its superconducting properties. The silver layer 104 provides a low resistance interface from the ReBCO-HTS layer 103 to the stabiliser layer 105, and the stabiliser layer 105 provides an alternative current path in the event that any part of the ReBCO ceases superconducting (enters the "normal" state).

In addition, "exfoliated" HTS tape can be manufactured, which lacks a substrate (e.g. Hastelloy^{™} substrate) and buffer stack, but typically has a "surround coating" of silver, i.e. layers on both sides and the edges of the HTS layer. Tape which has a substrate will be referred to as "substrated" HTS tape.

HTS tapes may be arranged into HTS cables. An HTS cable comprises one or more HTS tapes, which are connected along their length via conductive material (normally copper). The HTS tapes may be stacked (i.e. arranged such that the HTS layers are parallel), or they may have some other arrangement of tapes, which may vary along the length of the cable. Notable special cases of HTS cables are single HTS tapes, and HTS pairs. HTS pairs comprise a pair of HTS tapes, arranged such that the HTS layers are parallel. Where substrated tape is used, HTS pairs may be type-0 (with the HTS layers facing each other), type-1 (with the HTS layer of one tape facing the substrate of the other), or type-2 (with the substrates facing each other). Cables comprising more than two tapes may arrange some or all of the tapes in HTS pairs. Stacked HTS tapes may comprise various arrangements of HTS pairs, most commonly either a stack of type-1 pairs or a stack of type-0 pairs and (or, equivalently, type-2 pairs). HTS cables may comprise a mix of substrated and exfoliated tape.

When describing coils in this document, the following terms will be used:
- "HTS cable" - a cable comprising one or more HTS tapes. In this definition, a single HTS tape is an HTS cable.
- "turn" - a section of HTS cable within a coil which encloses the inside of the coil (i.e. which can be modelled as a complete loop)
- "arc" - a continuous length of the coil which is less than the whole field coil
- "inner/outer radius" - the distance from the centre of the coil to the inside/outside of the HTS cables
- "inner/outer perimeter" - the distance measured around the inside/outside of the coil
- "thickness" - the radial depth of all of the turns of the coil, i.e. the difference between the inner and outer radius
- "critical current" (I_{C}) - the current at which the HTS would become normal, at a given temperature and external magnetic field (where HTS is considered to have "become normal" at a characteristic point of the superconducting transition, where the tape generates E₀ volts per metre. The choice of E₀ is arbitrary, but is usually taken to be 10 or 100 microvolts per metre.)
- "critical temperature" - the temperature at which the HTS would become normal, at a given magnetic field and current
- "peak critical temperature" - the temperature at which the HTS would become normal given no external magnetic field, and negligible current
- electrical insulator material - material having an electrical resistivity of more than around 10⁶ Ohm-metre, e.g. insulators such as MgO and diamond, which each have a resistivity of more than around 10¹² Ohm-metre (at room temperature)
- electrical conductor material - material having an electric resistivity of less than around 10⁻⁶ Ohm-metre.

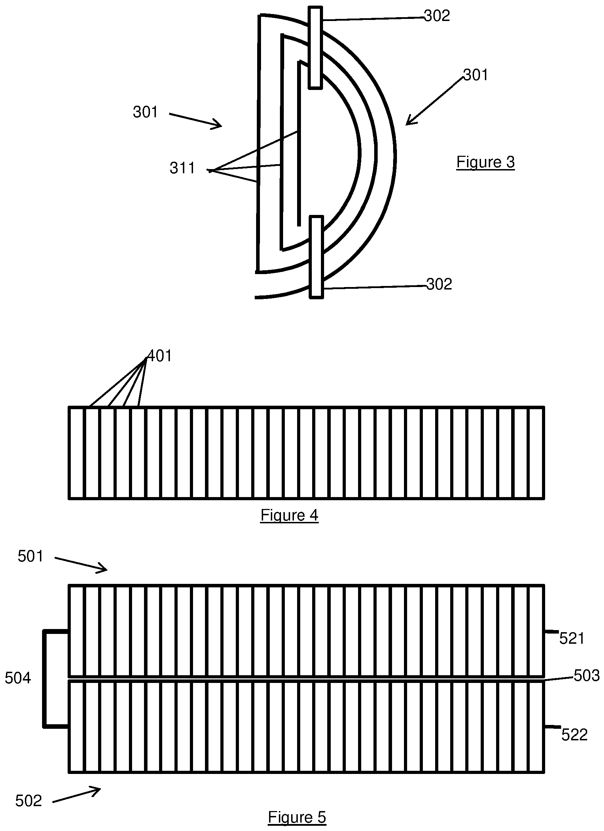

Broadly speaking, there are two types of construction for HTS field coils - by winding, or by assembling several sections. Wound coils, as shown in Figure 2, are manufactured by wrapping an HTS cable 201 (shown as a solid line) around a former 202 in a continuous spiral. The former is shaped to provide the required inner perimeter of the coil, and may be a structural part of the final wound coil, or may be removed after winding. Sectional coils, as shown schematically in Figure 3, are composed of several sections 301, each of which may contain several cables or preformed busbars 311 (shown as solid lines) and will form an arc of the overall coil. The sections are connected by joints 302 to form the complete coil. While the turns of the coils in Figures 2 and 3 are shown spaced apart for clarity, there will generally be material connecting the turns of the coil - e.g. they may be consolidated by potting with epoxy.

The coils may be "insulated" - having electrical insulating material between the turns of the coil (e.g. so that there is a turn-to-turn resistance of around 1 Ohm or greater), or "non-insulated", where the turns of the coil are electrically connected radially (i.e. connected by an electrical conductor material), as well as along the cables (e.g. by connecting the copper stabiliser layers of the cables by soldering or by direct contact). Insulated HTS coils can be used in applications in which large, rapid changes in magnetic field are required, such as plasma control in fusion magnets. By contrast, non-insulated coils are generally not suitable for large field coils, due to extremely high ramp-up times. A middle ground option is a "partially insulated" coil, where the material between turns has resistance intermediate between that of a traditional electrical conductor, e.g. a metal, and a that of a traditional electrical insulator, such as ceramic or organic insulator, e.g. having a resistivity between 100 and 10¹⁶ times that of copper or between 10⁻⁶ and 10⁸ Ohm metre. Partially insulated HTS magnets, i.e. HTS magnets with a partially conductive turn-to-turn connection (i.e. a turn-to-turn connection with material of an "intermediate" resistivity between 10⁻⁶ and 10⁸ Ohm-metre), have a reduced field sweep rate but offer increased thermal and electrical stability under operational conditions, e.g. because the coils allow heat and/or electrical current to be conducted both around and between the windings of the coil. Partial insulation may be achieved by the selection of materials with an appropriate resistivity, or by providing partially insulating structures, which provide the required resistance. Such structures are described in detail in WO 2019/150123 A1.

Insulated and partially insulated magnets require components to be introduced into the coil to either insulate the turns (windings) from one another or provide a turn-to-turn connection. Insulated magnets are often made by co-winding HTS tapes with insulating materials such as polyimide. Partially insulated magnets are made in a variety of ways such as co-winding with metallic tapes (e.g. stainless steel tape), applying edge coatings, or co-winding with a specially fabricated flexible printed circuit board (PCB) containing conductive tracks.

Each of these methods of manufacture suffers from one or more drawbacks. For example, co-winding HTS tapes with other types of tape (or PCB) reduces the current density in the magnet windings. Introduction of organic insulators (such as polyimide) may also reduce the mechanical performance of the coil, e.g. by reducing its Young's modulus. Poor mechanical performance may also occur in some cases because the windings of the magnet are not bonded together (the windings are "non-consolidated"), such that contact pressure between the turns is relied on to provide turn-to-turn contacts. For example, dry wound non-insulated or metal insulated coils have been shown to suffer conal deformation (i.e. deformation causing the coil to adopt a cone-like geometry) because of induced screening currents that occur when the coils are operated. Some organic insulating materials may also be poor choices for use in fusion applications because of their poor neutron tolerance.

Another problem with existing methods of making insulated or partially insulated coils is that the turn-to-turn resistivity value may be too low to be implemented on large (high inductance) coils. As the electromagnetic time constant associated with a coil is determined by the ratio of the coil's inductance to its resistance (L/R), high inductance coils require correspondingly "high" turn-to-turn resistances so that the coil can respond to changing electrical current/magnetic field on a suitable timescale. A further issue is that, in some cases, the geometry of the turn-to-turn connection, or its limited thermal connection to the magnet, can result in excessive Ohmic-heating during discharge, leading to electrical burnout of the connection. This may occur, for example, when a partially insulated magnet is formed by introducing a PCB between the turns: the thin metal tracks of the PCB are generally thermally insulated from the rest of the magnet by the polyimide insulation.

Figure 4 shows a radial cross section of a specific type of wound coil known as a "pancake coil", in which HTS cables (tapes) 401 are wrapped to form a flat coil, in a similar manner to a spool of ribbon. Pancake coils may be made with an inner perimeter which is any two dimensional shape. Often, pancake coils are provided as a "double pancake coil", as shown in the radial cross section of Figure 5, which comprises two pancake coils 501, 502 wound in an opposite sense to one another, with insulation 503 between the pancake coils, and with the inner terminals connected together 504. This configuration means that voltage only needs to be supplied to the outer terminals 521, 522 (which are generally more accessible) to drive current through the turns of the coil and thereby generate a magnetic field.

One application of HTS field coils is in tokamak plasma chambers ("tokamaks"). A tokamak features a combination of strong toroidal magnetic field, high plasma current and, usually, a large plasma volume and significant auxiliary heating, to provide hot, stable plasma in which fusion can occur. The auxiliary heating (for example via tens of megawatts of neutral beam injection of high energy hydrogen, deuterium or tritium) is necessary to increase the temperature to the sufficiently high values required for nuclear fusion to occur and/or to maintain the plasma current.

An issue with using HTS field coils in tokamak plasma chambers is that, because of the large size, large magnetic fields, and high plasma currents that are generally required, build and running costs are high and the engineering has to be robust to cope with the large stored energies present, both in the magnet systems and in the plasma, which has a risk of 'disrupting' - mega-ampere currents reducing to zero in a few thousandths of a second in a violent instability.

The situation can be improved by contracting the donut-shaped torus of a conventional tokamak to its limit, having the appearance of a cored apple - the 'spherical' tokamak (ST). The first realisation of this concept in the START tokamak at Culham demonstrated a huge increase in efficiency - the magnetic field required to contain a hot plasma can be reduced by a factor of 10. In addition, plasma stability is improved, and build costs may be reduced.

To obtain the fusion reactions required for economic power generation *(i.e.* much more power out than power in), a conventional tokamak would have to be huge so that the energy confinement time (which is roughly proportional to plasma volume) can be large enough so that the plasma can be hot enough for thermal fusion to occur.

WO 2013/030554 A1 describes an alternative approach, involving the use of a compact spherical tokamak for use as a neutron source or energy source. The low aspect ratio plasma shape in a spherical tokamak improves the particle confinement time and allows net power generation in a much smaller machine. However, a small diameter central column is required, which presents challenges for design of the plasma confinement vessel and associated magnets.

The magnet coils in a tokamak can be divided into two groups. The poloidal field coils are horizontal circular coils wound with their centre located on the central column of the tokamak, and produce a poloidal field (i.e. a magnetic field which is substantially parallel to the central column). The toroidal field coils are wound vertically through the central column, and around the outside of the plasma chamber (the "return limbs") to produce a toroidal field (i.e. a magnetic field which is circular around the central column). The combination of the poloidal and toroidal fields produces a helical magnetic field within the plasma chamber that keeps the plasma confined.

The electric currents required to generate the toroidal field are very large. Designs for tokamaks therefore increasingly involve the use of superconducting materials in the field coils. For a compact spherical tokamak, the diameter of the central column should be as small as possible. This presents conflicting requirements, as the current density which can be achieved, even with superconducting materials, is limited.

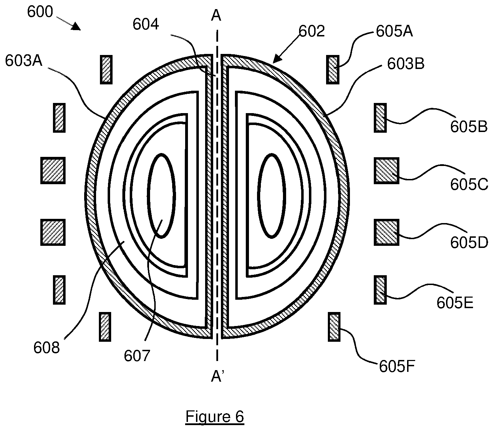

Figure 6 shows a vertical cross section through of a spherical tokamak 600 comprising a toroidal field magnet (TF) 602 formed from a plurality of D-shaped TF coils 603A,B (only two of which are shown in Figure 6) arranged around a central column 604 orientated along an axis A-A', and a plurality of poloidal field (PF) magnets 605A-F, each encircling the central column 604. Electrical current applied to the TF and PF magnets 603A,B, 605A-F generates a closed magnetic field that, when the tokamak is in use, confines, shapes and controls a hot plasma 607 inside a toroidal vacuum vessel 608.

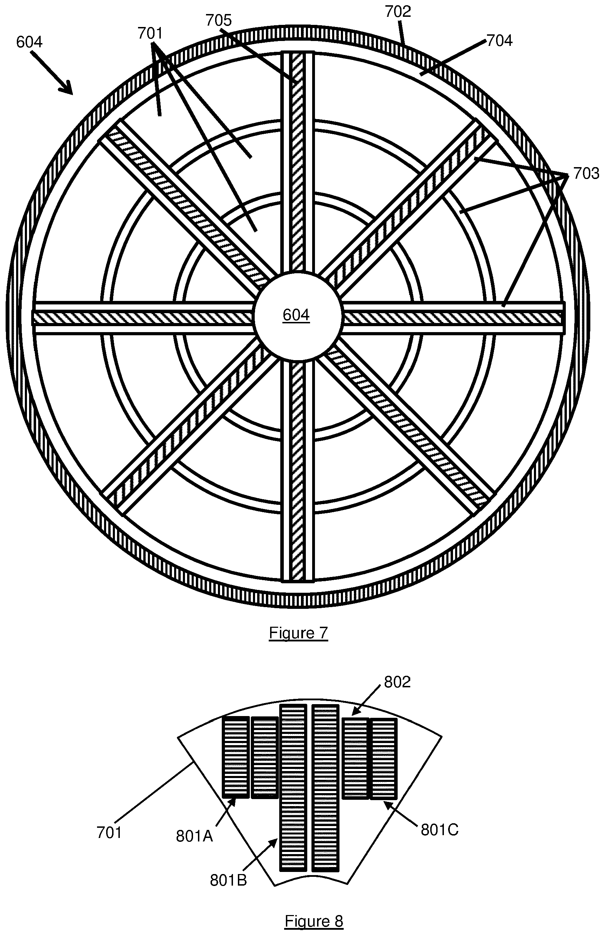

Figure 7 shows a cross section of the central column 604, which comprises a plurality of current carrying assemblies 701, through which the central column sections of the TF coils pass. Space in the central column 604 is taken up by both the current carrying assemblies and non-current carrying components, including, for example:
- neutron shielding 702 - to prevent heating of the central column and degradation of the critical currents of the superconductor in the central column,
- electrical insulation 703 - to electrically isolate the current carrying assemblies from each other;
- coolant channels 704 - to carry heat away from the central column (e.g. using a cryogen);
- cooling ribs 705 - to carry heat from the individual current carrying assemblies to the coolant channels 704.

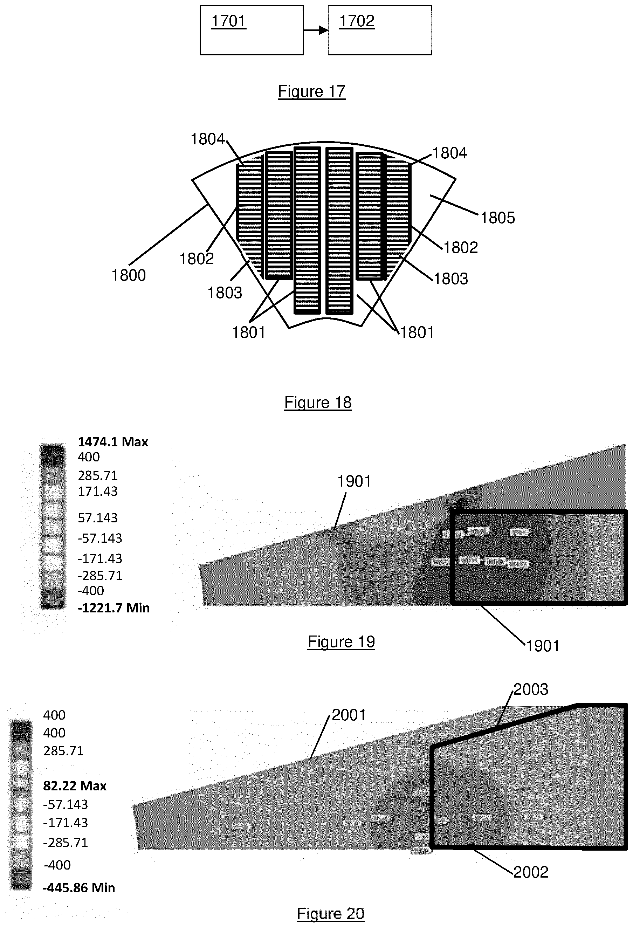

Figure 8 shows one of the sectors 701 of the central column 604. The sector 701 comprising three current carrying assemblies 801A-C which make up the TF coil 602. Each assembly comprises one or more HTS field coils 801, e.g. a pancake coil or double pancake coil. It is apparent from Figure 8 that the rectangular cross sections of the HTS field coils do not fit well into the arc-shaped cross section of the sector 701 and a large amount of space is wasted that more than could be usefully used for other components, such as additional cooling channels or sensors. The arrangement of the current carrying assemblies 801A-C within the sector 701 also results in high stresses at the corners of the cross section of the HTS coils (as discussed below in relation to Figure 19).

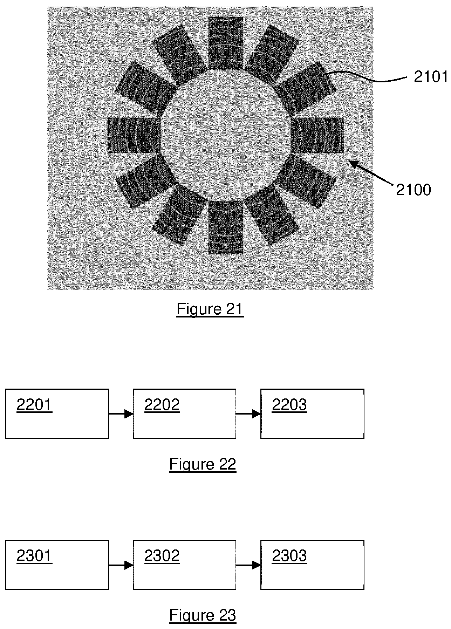

Another issue with the current carrying assemblies 801A-C in sector 701 is that the current carrying assemblies 801A, 801C closest to the tapered sides of the sector 701 have fewer turns than the centrally located current carrying assembly 801B. These differences in the number of turns of HTS tape results in a high level of "ripple" in the magnetic field (as discussed below in relation to Figure 21), which causes the magnetic field within and close to the central column to deviate from the desired circular symmetry. There is therefore a need for an alternative construction for the TF coils in the central column which avoids these effects.

US2002/144838 A1 describes joining first and second HTS coated elements via their cap layers. US2012/0065074 A1 describes superconducting articles including stacks of superconductor segments. US2006/0073979 A1 describes laminated superconductor wire.

Duan Yujie et al., "Effect of substrate thickness on interfacial adhesive strength and thermal residual stress of second-generation high-temperature superconducting tape using peel test modeling", Cryogenics, Elsevier, Kidlington, GB, (20180718), vol. 94, pages 89 - 94, describes a study into the effect of substrate thickness on the interfacial adhesive strength of 2G HTS tape using peel test modelling.

WO2019/150123 A1 describes HTS coils having a partially insulating layer that comprises an electrically conducting layer, and first and second insulating layers. The electrically conducting layer is coated on one side with the first insulating layer and on the other side with the second insulating layer. Each insulating layer has one or more windows through which electrical contact can be made between the turns and the electrically conducting layer. The windows in the first insulating layer are offset in the plane of the electrically conducting strip from the windows in the second insulating layer.

EP4078630 A1 and WO2020/104807 A1 describe constructing coils by wrapping HTS cable around a former.

### Summary

It is an object of the present invention to provide a method of fabricating an HTS field coil that addresses, or at least alleviates, the problems described above. This object is addressed by the appended claims.

The present invention is directed to a method of manufacturing a High Temperature Superconductor, HTS, field coil from one or more HTS tapes according to the independent method claim 1 and to a resulting HTS field coil according to claim 14.

Removing material from the axial edge of the one or more HTS tapes may comprise reducing an extent of the HTS material layer along the axis of the field coil.

In embodiments in which the HTS tape has a layered structure (such as the HTS tape 100 shown in Figure 1), the HTS tape is typically wound such that the layers are parallel to the axis of the field coil, i.e. the tape is wound such that the layers are arranged concentrically about the axis of the field coil. In such an arrangement, removing material from the axial edge of the HTS tape (e.g. by mechanical means, such as machining) may comprise removing material from each of the layers simultaneously. For HTS tapes with a rectangular cross section (such as the HTS tape 100, shown in Figure 1), the axial edge of the HTS tape typically corresponds to the smaller side of the rectangular cross section, i.e. to the edge of the HTS tape corresponding to the "thickness" of the HTS tape.

The material may be removed such that the extent of the HTS layer along the axis of the coil varies radially across the field coil and/or circumferentially around one or more of the windings. Removing the material may comprise removing material across a whole of a face of the field coil. The material may be removed so as to provide the field coil with at least one axial surface that is frustoconical. Removing the material comprises removing electrically conductive cladding in electrical contact with the HTS material and extending across at least the axial edge of the HTS tape. The cladding may be removed from the axial edge of the one or more HTS tapes across the whole of a face of the field coil to expose the HTS material layer at the axial edge of the one or more of the HTS tapes.

The or each HTS tape may comprise a flexible substrate (e.g. a substrate comprising Hastelloy^{™} or another metal or alloy) and an electrical insulator layer (e.g. a buffer stack 102) provided on a face of the flexible substrate, with the HTS material layer being provided on the electrical insulator layer. Alternatively, exfoliated tape may be used, in which case there is no electrical insulator layer and the HTS material layer is provided on the flexible substrate (which may be made of silver, for example).

The intermediate layer may be or may comprise an electrical insulator layer (e.g. buffer stack 102) or a semiconductor layer, e.g. a layer of silicon and/or gallium arsenide, the semiconductor layer optionally being incorporated as a layer with a buffer stack 102. The HTS field coil may be radially "insulated" or "partially insulated" (as described above) depending on the resistivity of the intermediate layer, as described above. For example, in some embodiments, the resistivity of the intermediate layer may be between 10⁻⁶ and 10⁸ Ohm-metre to provide a partially insulated coil.

Before the cladding is partially or wholly removed from the edge of the one or more HTS tapes, the cladding may extend continuously around the entire perimeter of the HTS tape.

The method may comprise bonding an electrical conductor element to the cladding on the axial edge of the one or more HTS tapes before removing the metal cladding. The method may comprise partially removing the electrical conductor element to leave an electrical contact through which to supply electric current to at least a portion of at least one of the windings through the axial edge of the one or more HTS tapes.

In embodiments in which the intermediate layer is an electrical insulator layer, the electrical insulator layer may, for example, have a thickness of less than 3 micrometers, or less than 1 micrometer, and preferably less than 0.3 micrometers. The electrical insulator layer may comprise one or more layers of ceramic material. The substrate may have a thickness of less than 100 micrometers, or less than 75 micrometers, and preferably less than 50 micrometers. Generally speaking, the HTS material layer may comprise ReBCO material, wherein Re is a rare earth element such as Y or Gd. The HTS material layer may have a thickness of less than 10 micrometers, or less than 1 micrometer. The electrically conductive cladding may comprise a metal, such as copper and/or silver. The electrically conductive cladding of the or each HTS tape may extend over each face of the HTS tape.

The windings of the HTS field coil may be arranged in two or more layers stacked along the axis of the field coil and the material is removed from an axial edge of the one or more HTS tapes in one or more of the layers. The HTS field coil may, for example, be a double pancake coil.

The material may be removed around a whole of one or more of the windings.

The HTS field coil may comprise two HTS tapes arranged as a type-0 pair in which the HTS layers of the two HTS tapes face each other and the substrates of the HTS tapes are separated by the HTS layers.

The method may further comprise sealing the edge of the one or more of the HTS tapes with an insulator or conductor material.

Removing the material from the axial edge of the one or more of the HTS tapes may comprise mechanically removing the material, preferably by machining the axial edge of the one or more HTS tapes. Mechanically removing the material may comprise one or more of: cutting; drilling, laser cutting, plasma cutting, water jet cutting, grinding, sanding, wire erosion, turning, laser ablation, ion milling, sputtering, and electrical discharge machining.

Alternatively or additionally, the material may be partially or wholly removed from the axial edge of the one or more of the HTS tapes chemically. For example, if the cladding comprises copper, the cladding may be chemically removing by dissolving the copper using ferric chloride solution. If the cladding comprises silver, the cladding may (preferably) be chemically removed by dissolving the silver in a solution comprising an oxidising agent such as hydrogen peroxide.

The method may comprise cooling the HTS field coil during the step of removing the material from the axial edge of the one or more HTS tapes. This cooling may, for example, prevent heat damage or degradation of the HTS material layer.

The method may further comprise polishing the axial edge of the one or more HTS tapes after removing the material.

The method may further comprise removing material from another axial edge of the one or more HTS tapes, the other axial edge being provided on a face of the field coil opposite a face of the field coil on which the axial edge is provided.

Removing the material may comprise cutting through the HTS field coil to divide the HTS field coil into two or more HTS field coils. For example, the HTS field coil may be divided by a cutting surface (e.g. a plane) passing through each of the one or more HTS tapes. For example, the HTS field coil may be may divided by a cutting plane that is substantially perpendicular to the axis of the coil, the plane preferably bisecting the coil. The method may further comprise forming one or more electrical connections between the two or more HTS field coils to form a solenoid.

The method may further comprise, before removing material from the axial edge of the one or more of the HTS tapes, potting the field coil.

Winding the one or more HTS tapes about an axis to form a field coil may comprise winding a cable having two outer HTS tapes of the one or more HTS tapes and one or more internal HTS tapes. The internal HTS tape(s) is or are arranged between the outer HTS tapes and have metal cladding that provides an electrically conductive pathway between the HTS layers of the two outer HTS tapes. Before and/or after removal of the material, the internal HTS tape(s) may be narrower than the external HTS tapes along a direction parallel to the axis of the coil. Before and/or after removal of the material, respective axial edges of the internal HTS tape(s) and the outer HTS tapes may be aligned with one another along an edge of the cable.

### Brief Description of the Drawings

Figure 1 is a schematic perspective view showing the internal structure of ReBCO tape;
Figure 2 is a schematic top view of a wound coil;
Figure 3 is a schematic top view of a sectional coil;
Figure 4 is a schematic radial cross section view of pancake coil;
Figure 5 is a schematic radial cross section view of a double pancake coil;
Figure 6 is a schematic vertical cross section view of a tokamak;
Figure 7 is a cross section of a central column;
Figure 8 is a cross section of a sector of the central column of Figure 7;
Figure 9 is a schematic cross section view of ReBCO tape;
Figure 10 is a schematic radial cross section view of a coil comprising a cable formed from two ReBCO tapes;
Figure 11 is a schematic radial cross section view of a coil formed by removing the metal cladding from the axial edges of the coil of Figure 10;
Figure 12 is a schematic radial cross section view of the coil of Figure 11 modified to include electrical contacts inserted between windings of the coil;
Figure 13 is a schematic radial cross section view of a coil comprising a pair of conductor plates extending over the axial edges of a coil comprising a cable formed from two ReBCO tapes; and
Figure 14 is a schematic radial cross section view of the coil,in which parts of the metal cladding and the conductor plates have been removed from the coil of Figure 13;
Figure 15 is a schematic radial cross section view of a coil comprising a cable formed from four ReBCO tapes; and
Figure 16 is a schematic radial cross section view of a coil formed by removing the metal cladding from the axial edges of the coil;
Figure 17 is a flowchart of a method of manufacturing an HTS coil.
Figure 18 is a cross section of a sector of an exemplary central column;
Figure 19 shows the results of a stress simulation of an HTS stack in a TF magnet;
Figure 20 is shows the results of a stress simulation of an HTS stack in an exemplary TF magnet;
Figure 21 is a cross section of a central column, showing the magnetic field;
Figure 22 is a flowchart of a method of manufacturing an HTS coil;
Figure 23 is a flowchart of a method of manufacturing a TF magnet comprising a plurality of HTS field coils for use in a tokamak plasma chamber; and

### Detailed Description

A solution to some of the above issues is proposed here, in which an HTS field coil is modified after it has been wound using one or more HTS tapes, by removing material from an axial edge of the one or more HTS tapes. For example, in one embodiment, HTS material is removed from the HTS tapes to vary the superconductor properties of

the tape in different regions of the coil. In another embodiment, material is removed so that the buffer stack of the HTS tape provides turn-to-turn electrical insulation in an insulated or partially insulated field coil. Such a field coil can be produced, by fully or partially removing the metal cladding from the edges of HTS tape, e.g. after the HTS tape has been wound into a coil. The resulting coil may be referred to as a "Buffer Layer Insulator" (BLI) coil.

Figure 9 shows a radial cross section through a ReBCO tape 900 that is similar to the ReBCO tape 100 of Figure 1. Elements which are the same as in the tape of Fig. 1 are given the same reference numerals. However, in this example, the copper stabilizer layer 105 and the silver layer 104 can be seen to extend around the other layers of the tape 900 to enclose them completely, i.e. the copper stabilizer layer 105 and silver layer 104 act as cladding for the layered structure of the tape 900.

As mentioned above, the substrate 101 is typically Hastelloy^{™} and has a thickness of around 50-75 µm. The buffer stack 102 is a series of four ceramic layers of materials such as MgO, LaMaO3, YSZ, etc. which typically have a combined thickness of around several hundred nanometres to a few microns. Details of the composition and thickness of the layers of the buffer stack 102 generally vary according to supplier. The copper cladding 105 is typically around 10 to 20 µm thick (including at the edges). Buffer stacks with more than (or fewer than) four ceramic layers could also be used.

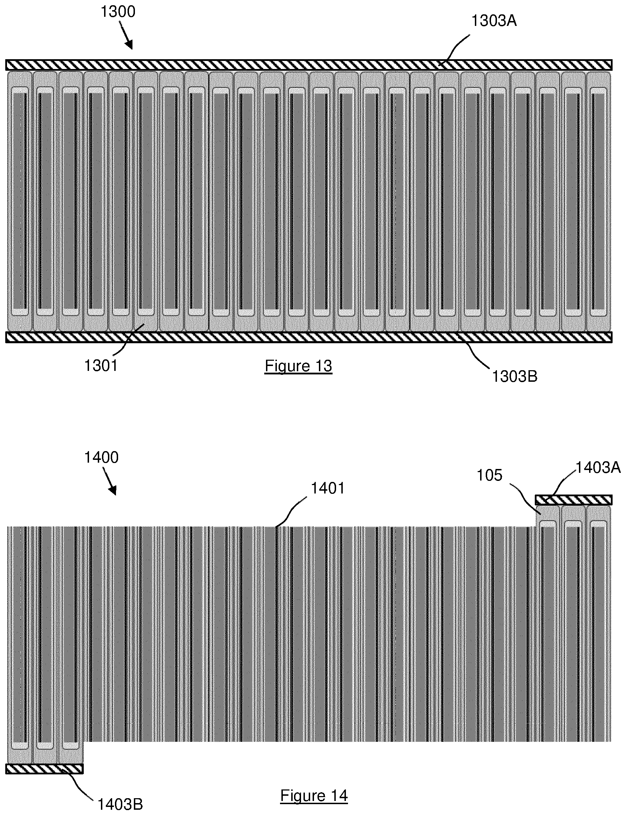

Figure 10 shows a radial cross section view of a pancake coil 1000 formed by winding two ReBCO tapes 900A,B about an axis Z (the axis of the coil). For clarity, only two windings 1002, 1004 of the tapes 900A, B are shown in the figure, but any number of windings can be used (see Figure 13, for example). The windings 1002, 1004 of the coil 1000 are nested within one another to form a generally planar coil 1000. In this particular example, the tapes 900A,B are arranged in a type-0 configuration, such that their ReBCO layers face one another, which allows some electrical current to be shared between the two tapes 900A,B when the coil 1000 is operated. Other configurations are of course possible, as discussed above. The coil 1000 is generally solder potted with e.g. PbSn solder, to form a non-insulated coil.

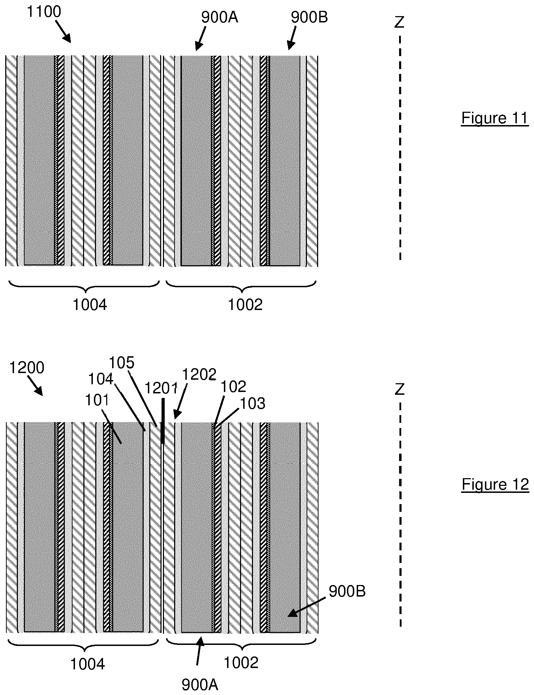

Figure 11 shows a radial cross section view of a coil 1100 made by removing the copper and silver cladding 104, 105 from both faces of coil 1000 to expose the layered structure of the ReBCO tape 900.

The cladding can be removed mechanically by several methods, including turning or wire erosion. In one preferred embodiment, a copper plate is soldered across a face of the coil 1000 and the plate subsequently machined away by milling, grinding, turning (e.g. on a lathe), or other means of mechanical metal removal, to leave one or more metal joint rings for injecting current into the coil 1000 through the edges of the HTS tapes 900A,B. In this case, the cutting tool penetrates the metal plate and continues into the HTS tapes 900A,B to remove around 0.5 mm of the edges of the HTS tapes 900A,B. This process can of course be carried out on one or both of the faces of the coil 1000, depending on the desired turn-to-turn resistance for the coil 1000 (which is maximised by removing the cladding entirely from both faces). The turn-to-turn resistance can also be varied by changing the thickness of one or more of the layers 104 of the buffer stack of the HTS tapes 900A,B (e.g. a thinner buffer stack can be used to make a coil that is only partially insulating). Other types of metal plate (other than copper) can also be used. Current can also be injected into the coil by means other than an "edge connected" plate. For example, metallic components (contacts) at the inner diameter and/or the outer diameter of the coil onto which the cable is terminated e.g. by soldering.

Alternatively or additionally, chemical processes can be used to dissolve the copper and silver cladding. For example, the copper cladding 105 can be dissolved using ferric chloride (FeCl₃) solution. To dissolve the silver cladding 104, a solution of 1 part ammonium hydroxide and 1 part hydrogen peroxide, optionally diluted with methanol to reduce reaction rate, can then be used. Other reagents can also be used to dissolve the silver cladding, including nitric acid and/or hydrochloric acid, or hydrogen peroxide solution in combination with an acid or base. The surface of the ReBCO layer 103 is generally unaffected by removing the copper and silver cladding 104, 105 using a solution of hydrogen peroxide and ammonium hydroxide. In some cases, the use of other reagents to remove the silver cladding 104 may dissolve or react with the ReBCO layer 103 at its exposed edges. However, a small amount of degradation of the edge of the ReBCO layer 103 is generally acceptable for many applications. Optionally the edges can then be sealed using an insulating material, such as an epoxy resin, to prevent ingress of contaminants to the exposed tape edges and permit thermal contact to be made. Portions of the coil at the internal diameter and outer diameter can be omitted from the edging process in order to leave the metallic layers in place for the purposes of current injection (not shown).

Other methods for removing the copper and silver cladding 104, 105 include sputtering (e.g. using ion milling) and/or laser ablation.

The structure of the BLI coil 1100 has a number of advantages. As the BLI coil 1100 is wound only from ReBCO (HTS) tape the current density of the magnet is maximised (in contrast to other types of insulated or partially insulated magnet made by co-winding the HTS tape with another tape or PCB). In particular, the buffer layers 102 of the tapes 900A,B are very effective turn-to-turn resistors because they are very thin, have maximal cross sectional area, and are in intimate thermal contact with the ReBCO (HTS) layers 103. The Young's modulus of the BLI coil 1100 and the structural integrity of the coil also remain high because the coil 1100 contains (essentially) only HTS tape.

The buffer stack layers 102 present an insulating barrier between the turns of the coil 600 without the need for additional layers of insulating material to be introduced between the windings, e.g. with without the use of low modulus organic insulation. This allows the insulated coil to have both a high Young's modulus and a high density of turns, i.e. a density of turns that is determined substantially by only the thickness of the HTS tape. A high (e.g. maximal) density of turns may allow the coil 600 to provide higher current densities compared to other coils that incorporate additional material between the windings of the HTS tape. The cross sectional area of the turn-to-turn connection is also maximal, spanning the entire width of the HTS tapes, which maximises the opportunity for heat to be transferred between the windings, e.g. in the event of a quench. The rigidity of the coil 600 and the consolidation of the windings may also reduce or minimise the strain (or variation in strain) within the HTS tape, which may, for example, prevent degradation of the HTS material when the coil is used and/or make the coil 600 easier to maintain. A lack of additional material within the coil (such as organic insulation) also avoids the possibility that the additional material degrades, which may be of particular concern if the coil is exposed to high neutron fluxes, such as those produced in fusion reactors.

Figure 12 shows a schematic radial cross section through a coil 1200, which is identical to coil 1100, except that an electrical contact 1201 has been made to a central electrical conductor region 1202 located in between the centres (in the radial direction) of the respective windings 1002, 1004. The central region 1202 comprises the metal cladding (i.e. copper cladding 105 and silver cladding 104) and the substrates 101 of each tape 900A,B (i.e. tape 900B of winding 1004 and tape 900A of winding 1002). The metal cladding 104, 105 and the substrate 101 of each tape 900A,B in the conductor region 1202 are electrically connected to one another, but electrically isolated from the HTS layers 103 of each tape 900A,B immediately adjacent the conductor region 1202 by the buffer stacks 102. In other words, electrical contact 1201 is made to a central region 102 of the windings 1002, 1004 that is electrically insulated (along the radial direction) from the HTS layers 102 of the tapes. The electrical contact 1201 can be made by inserting a metal (e.g. copper) contact between the windings 1002, 1004 when the coil 1200 is being wound. Alternatively, or additionally, the electrical contact 1201 may be made by soldering a metal contact to the axially facing edge of the electrical conductor region 1202.

When electrical current is supplied to HTS layers 103 of the windings 1002, 1004, an inductive voltage is generated within the coil 1200. This voltage is "picked up" by the electrical conductor region 1202 and can be measured using a potentiometer connected between the electrical contact 1201 and another electrical contact made to another part of the electrical conductor region 1202, e.g. a contact to the radially innermost turn or radially outermost turn of the coil 1200. The measured inductive voltage between the two contacts can then be subtracted from a voltage measured across the coil 1200 as a whole, i.e. between the innermost turn of the coil 1200 and the outermost turn of the coil 1200 and comprising the HTS layers 103. The remaining voltage therefore gives the resistive (rather than inductive) contribution to the voltage drop across the coil 1200, which is a good indicator of whether the HTS layers 103 are superconducting. In other words, the difference between the voltage across the coil 1200 and the inductive voltage measured for the electrical conductor region 1202 is indicative of a resistive voltage building in the coil 1200, which is itself indicative of a non-superconducting region developing or having been developed in the HTS material, which may lead to rapid heat generation within the coil (i.e. an incoming quench).

Figure 13 shows a radial cross section view of a coil 1300 comprising a plurality of windings of HTS tape 1301 arranged to form a predominantly planar pancake coil and two ring conductors 1303A, B covering the faces of the coil across the edges of the HTS tape 1301 on either side of the coil 1300. Each ring conductor 1303A,B comprises an annulus or ring made from a conducting material, preferably a metal such as copper, which extends radially across the coil to form an electrical connection between the windings of the coil 1300. The ring conductors 1303A,B are soldered to faces of the coil 1300 to provide good electrical contact with the edges of the HTS tape 1301.

Figure 14 shows a radial cross section view of a coil 1400 obtained by removing the ring conductors 1303A,B and the cladding 105 from a portion of the coil 1300 shown in Figure 13. For example, material from the ring conductor and the cladding can be machined away to leave portions of the ring conductors 1403A,B bonded to the cladding 105, whilst exposing the HTS layer 103 at the edge of the HTS tape 1401. Electric current can be supplied to the coil 1400 through the radially innermost end of the HTS tape 1401 using the top ring conductor 1403A. The current flows around successive windings of the coil 1400 before being received by the bottom ring conductor 1403B at the radially outermost end of the HTS tape 1401, i.e. the ring conductors 1403A,B function as electrical contacts (or "current connection points") through which to transfer electrical current to or from the coil 1400. It is believed that during the initial stages of current injection the current injected into the coil 1400 penetrates the turns covered by the ring conductor 1403A (which act as a small "non-insulated" coil) to produce a current distribution that minimises impedance across the turns. Over time, the current distribution within the coil 1400 then adjusts from a distribution that (i) initially reduces the inductive voltage (such that the current flows from the radially outermost edge of the top ring conductor 1403A through the turns of the coil 900 in between the two ring conductors 1403A,B and out through the radially innermost edge of the bottom ring conductor 1403B) to (ii) a current distribution that minimises Ohmic voltage (such that current will penetrate all the turns of the ring conductors 1403A,B evenly).

The coil 1400 may, in some examples, have a ring conductor 1403A,B on only one face. Although the ring conductors 1403A,B are shown as being on opposite faces of the coil 1400, they may be provided on the same face, in which case electrical current can be injected or removed from only one side of the coil 900, which can be advantageous in space-constrained environments, for example.

Although it is preferred to remove the metal cladding after the HTS tape 900A,B, 1301, 1401 has been wound into a coil, a BLI coil may also be formed by removing the metal cladding from the sides of the HTS tape before winding the coil.

The coils 1000, 1100, 1200, 1300, 1400 described above are wound from a cable formed from two HTS tapes arranged in a type-0 configuration (with the HTS layers facing each other), which allows electrical current to be shared between the two HTS tapes 900A,B. Coils may also be formed from cable comprising more than two HTS tapes 900A,B. However, for these types of coil, removing the copper 105 and silver 104 cladding from the axial edges of the tapes 900A,B may prevent electrical current being shared between all the tapes 900A,B in the cable. This is because removal of the cladding means that current is only shared between tapes for which there is a type-0 configuration, i.e. for which the HTS layers 103 face one another. A solution to this problem may be achieved by winding the coil from cable comprising HTS tapes of different widths, as described below.

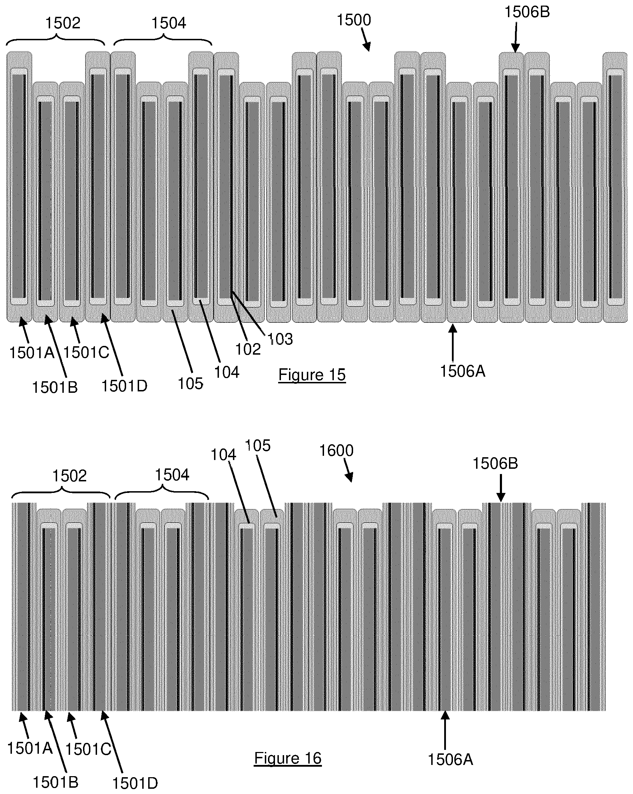

Figure 15 shows a radial cross section of a coil 1500 that comprises windings 1502, 1504 of a cable comprising four HTS tapes 1501A-D. The central axis Z of the coil (not shown) is to the right of part of the coil illustrated in Figure 15. Two of the tapes 1501A, D have a width that is greater than the width of the other two tapes 1501B,C. In Figures 15 and 16, the "widths" of the tapes 1501A-D (i.e. the second shortest dimension of the tapes) extend vertically as Figures 15 and 16 show radial cross sections through the coils. Each of the narrower tapes 1501B,C is provided in the cable between the wider tapes 1501A,D and arranged in a type-0 configuration with a respective one of the wider tapes 1501A,D, i.e. the wider tapes 1501A,D are oriented such that their HTS layers 103 are closer to the centre of the cable than their buffer stacks 102, while the narrower tapes 901B,C are orientated such that their HTS layers 103 are further from the centre of the cable than their buffer stacks 102. The windings of the coil 1500 (as exemplified by the windings 1502, 1504) are aligned on one side 1506A of the coil 1500 (in the direction transverse to the radial and circumferential directions) to give the coil a flat face on this (bottom) side 1506A of the coil 1500 and a radially "crenelated" face on the other (top) side 1506B of the coil 1500 as a result of the wider tapes 1501A,D protruding from the coil 1500 relative to the narrower tapes 1501B,C. The silver cladding 104 and the copper cladding 105 in the coil 1500 is intact.

Figure 16 shows a radial cross section of a coil 1600 obtained by removing the silver cladding 104 and copper cladding 105 from the flat face of the coil 1000 on the bottom side 1006B of the coil 1500 and from the wider tapes 1501A,D on the top side 1506B of the coil ("narrower" and "wider" referring here to the extent of the tapes along the axis of the coil 1600) . The cladding 104, 105 of the narrow tapes 1501B,C is not removed on the top side 1506B. Consequently, there is a conductive pathway provided by the cladding 104, 105 between the narrow tapes 1501B,C that allows electrical current to be shared between the narrow tapes 1501B,C, and therefore between each of the tapes 1501A,D making up the cable. There is, however, no electrically conductive pathway between adjacent windings 1502, 1504, so the coil 1600 is a BLI coil.

Alternatively, the coil 1500 may not have the edges of the HTS tapes aligned on one side 1506A, i.e. both sides of the coil 1500 may be stepped or "crenelated", in which case, is may not be necessary to remove any of the cladding 104, 105 from the narrower HTS tapes 1501B,C.

This approach (i.e. using HTS tapes of different widths) allows insulated or partially insulated coils to be constructed using cables comprising more than two HTS tapes, thereby expanding the scalability of this fabrication method to larger coils.

In some cases, the coil 1500 may be "potted" with solder to fill in the gaps between the wider tapes 1501A,D as this facilitates removal of the cladding 104, 105 from the wider tapes 1501A, D on the top side 1506B of the coil 1500. The solder covering the narrower tapes 1501BC provides mechanical stability for the wider tapes 1501A,D along the radial direction, which prevents them being damaged when the top side 1506B of the coil 1500 is machined to remove the cladding 104, 105.

In one specific example, the wider tapes 1501A,D have a width of 12 mm whereas the narrower tapes 1501B,C have a width of 11 mm or 10 mm. Preferably, the HTS layer 103 and buffer stack 102 of the wider tapes 1501A,D should extend above the narrower tapes 1501B,C so that the cladding 104, 105 can be removed from the wider tapes 1501A,D without damaging the cladding 104, 105 of the narrower tape 1001B,C. In some cases, the cladding 104, 105 of the tapes 1500A-D may extend beyond the HTS layer 103 and the buffer stack 102 by around 10 micrometers, such that around 10 micrometers of material (i.e. cladding) would need to be removed from either face of the coil 1500 to produce an insulated coil 1600. However, in practice, variation in the width of the HTS tape width and the alignment of the windings with respect to one another (i.e. the flatness of the coil) means that it may be preferable to remove 100 microns or more of material (i.e. the cladding and some of the HTS layer 103 and buffer stack 102) from each face of the coil to ensure that the coil is fully insulated.

Cables comprising more than four HTS tapes can also be used to produce insulated coils, provided that the HTS tapes 1501A,D providing the exterior faces of the cable are wider than the HTS tapes 1501B,C closer to the centre of the cable.

Figure 17 is a flowchart of a method of manufacturing an HTS coil from one or more HTS tapes. Each HTS tape comprises a flexible substrate, an electrical insulator layer (e.g. a buffer stack 102) provided on a face of the flexible substrate, an HTS material layer provided on the electrical insulator layer, and electrically conductive cladding in electrical contact with the HTS material and extending across at least an edge of the HTS tape. The electrical insulator layer may be only "partially insulating", in which case the electrical insulator may, for example, have a resistivity between 100 and 10¹⁶ times that of copper or between 10⁻⁶ and 10⁸ Ohm metre, and so forth.
- Step 1701 of the method comprises winding the one or more HTS tapes about an axis to form a field coil comprising windings of HTS tape.
- Step 1702 of the method comprises partially or wholly removing the cladding from an axial edge of the one or more of the HTS tapes around at least a part of one or more of the windings to increase the electrical resistance between the HTS material layer in the winding and the HTS material layer in an adjacent winding.

While the above discussion has focussed on removing the cladding from one or more axial edges of an HTS field coil 1000, 1100, 1200 it is also possible to remove further material from the axial edge(s) in order to reduce the width (i.e. extent along the axis of the coil) of the field coil. Surprisingly, it has been found that HTS field coils can be very resilient to physical damage, such that even large changes to the shape of the coil can be made after it has been wound. For example, it has been found that HTS field coils can function effectively even after several holes have been drilled through them or after the coil has been shaped via standard machining techniques, such as sawing, grinding and sanding). In particular, the electrical current may continue to be able to circulate around the HTS material of such coils even when there are interruptions to or damage within some of the coil windings. This may occur as a result of current sharing between neighbouring windings, which allows the current to "bypass" the affected parts of the windings. Current may continue to circulate around the windings of the coil so long as the total current does not exceed the minimum critical current of the HTS material in any part of the coil, or potentially even beyond the minimum critical current if the turn to turn resistance is sufficiently low and cooling is provided to cool the resistive heat load.

These findings present significant opportunities for situations in which the ease of assembly of a double pancake coil is desired, but the rectangular cross section of such a coil presents disadvantages, such as in the central column of a toroidal field coil (as described above). As discussed below in connection with Figure 18, the cross section of the coils can be modified after winding (and preferably after potting the coil in solder or epoxy, for example) so that the cross section fits better in the required space. "Potting" a coil refers to filling (or encasing) the coil with a material, e.g. solder or epoxy, following formation of the coil by winding one or more lengths of HTS tape (cable). The potting material fills gaps in the coil structure, and improves the structural integrity of the coil, e.g. to reduce the likelihood of the windings towards the inner radius or the outer radius of the coil from coming loose or being damaged during machining of the coil. Potting with a conductive material (e.g. solder) also improves the electrical connection between the turns of the coil. Potting the coil with a structurally effective material such as resin or solder provides effective transmission of radial stress, which may enable higher currents to be supplied to the coil to generate larger magnetic fields without exceeding the strain limit of the coil. In addition, the rigidity of the potted coil may reduce the amount of support that the coil requires. For example, the potted coil may be supported by a rigid supporting structure at its outer radius (or conversely, on its inner radius) only.

By varying the width (i.e. the extent along the axis of the field coil) of the HTS material layer 103, the superconducting properties of the HTS field coil 1000, 1100, 1200 such as the critical current can be varied. The further material that is removed generally comprises material from the axial edges of each of the layers in the HTS tape 100, i.e. the substrate 101, buffer stack 102, HTS material layer 103, and cladding 104, 105. The further material may be removed by (for example) machining one or both faces of the HTS field coil 200, 500 after the cladding 104, 105 has been removed from the axial edge(s) of the field coil 1000, 1100, 1200. Alternatively (or additionally) reduced width HTS field coils may be made by cutting through the HTS field coil, e.g. by cutting across the HTS field coil 1000, 1100, 1200 in a plane that is perpendicular to the coil axis Z, thereby dividing the coil into two HTS field coils of reduced width. The plane may bisect the field coil 1000, 1100, 1200 so that each of the narrower field coils has a width that is approximately half that of the original field coil 1000, 1100, 1200. For example, one or more 12 mm wide HTS tapes may be wound into a pancake coil, which is then divided into two pancake coils each having a width of approximately 6 mm. Cutting through the field coil 1000, 1100, 1200 may be accomplished by electrical discharge machining (also known as spark machining or wire erosion), for example. The axial edge(s) of the HTS field coils may be polished after machining to ensure that there are no "shorts" (i.e. no radial electrical connections between the windings) and/or to gently remove any damaged edges that might be caused by the cutting process.

The axial edges (or potentially all the outer surfaces) of the HTS field coils may preferably be hermetically sealed to prevent ingress of contaminants into the exposed laminar structure. This can be done by applying an insulator coating such as a ceramic or resin (e.g. epoxy resin). An insulating coating may be preferred to avoid forming unwanted electrical connections between turns. However, in some cases, such as where the HTS field have a low turn-to-turn resistivity (e.g. "partially insulated" coils), one or more metal layers may be applied instead (or applied beneath the insulator coating) to protect the layers of the HTS tape. For example a layer of nickel may be applied to the HTS coils, e.g. by deposition onto the surfaces of the HTS field coils via electroplating or other chemical or physical deposition methods.

This method of manufacturing HTS field coils of reduced width may be contrasted with the conventional method in which HTS field coils are made by selecting or preparing HTS tape 100 that has a width that corresponds to the desired width of the field coil. In particular, cutting the field coil 1000, 1100, 1200 to the desired width after the coil has been wound avoids the width of the coil being limited by the widths of HTS tape 100 that are available from manufacturers. It may also avoid the need to produce narrower HTS tape 100 by cutting commercially available HTS tape 100 down to size, which is generally time consuming, difficult to do accurately, and may induce edge damage (cracks) that may lead to long term conductor degradation, particularly in high field coils. Cutting through the HTS tape 100 after it has been wound into a field coil 1000, 1100, 1200 also allows the profile of the HTS field coil to be shaped into geometries that are more complex than that of a planar pancake coil. For example, one or both of the axial surfaces of the field coil may be convex or concave when viewed along the axis of the coil. In some examples, one or both of the axial surfaces of the field coil may be frustoconical i.e. shaped such that vectors normal to the exterior axial surface of the field coil either diverge from the axis or converge towards it. In some examples, only one of the axial surfaces is non-planar. Varying the width of the HTS field coil in this way allows the superconducting properties of the field coil to be varied (or "graded") for the different windings of the coil. The magnetic field that is produced by the coil when it is in use can also be shaped to some extent by varying the width of the field coil, which may be useful in applications in which fine control of magnetic fields are needed, such as in magnetic resonance imaging (MRI).

The reduced width HTS field coils made by the above method may, for example, be electrically connected to one another, e.g. to form a double pancake coil. One or more reduced width HTS field coils may be incorporated into an HTS solenoid formed from a stack of pancake coils. Preferably, the widths of the coils (i.e. their extent along the axis of the solenoid) may be adapted according to their position within the stack. For example, coils located in or close to the mid-plane of the HTS solenoid may have a reduced width compared to those located further away from the mid-plane. In general, the width of the coils may increase with increasing distance from the mid-plane of the solenoid. It is preferable to have thinner coils nearer to the mid-plane because the magnetic field in this part of the solenoid is parallel to HTS layer 103 and so the critical current density tends to be high, unlike at the extremities of the solenoid where field angles diverge away from parallel and critical current densities are commonly lower. It is therefore desirable for inner pancake coils (i.e. pancake coils near the mid-plane of the solenoid) to be thin, and the outer pancake coils to be wider, to equilibrate critical current across all the pancake coils and to make optimal use of conductor throughout the solenoid.

The above discussion of reduced width HTS field coils has referred to manufacturing the coils using "conventional" HTS tape comprising cladding 104, 105. However, in some cases, reduced width HTS field coils be manufactured from HTS tape 100 that does not comprise cladding 104, 105. Alternatively, in some other examples, the HTS tapes may comprise cladding 104, 105 that does not extend over the axial edges of the HTS tape.

Figure 18 shows a sector 1800 of an exemplary central column. As with the sector 701 shown in Figure 8, the sector 1800 is a cross section through a D-shaped HTS coil comprising six pancake coils, arranged as three double pancake coils. The HTS coil has been cut to provide a cross section in the central column which is a sector of an annulus. In this example, this is achieved by leaving the four pancake coils 1801 towards the centre of the sector unmodified, and cutting inclines 1803 and 1804 into the two pancake coils 1802 at the left and right sides of the sector 1800, such that the cross section of the pancake coils 1802 tapers towards and away from the central axis of the central column. The inclines 1803 and 1804 are formed such that the pancake coils 1802 (and the other half of the corresponding double pancake coils) can be made larger, that is the extent of the coil in a direction towards the axis of the central column can be increased (i.e. more windings can be accommodated), compared to those of Figure 8, with the incline 1803 adapted (i.e. fitting close) to the boundaries of the sector 1800. The inclines 1803, 1804 may be cut exclusively in the straight parts of the coils 1802 which pass through the central column (i.e. the "uprights" of each D-shaped coil), with the "return limbs" (i.e. the parts outside of the central column) being left unmodified.

Multiple such coils may be arranged to form a TF magnet, with the annular sectors 1800 of the central column sections of each coil 1802, 1801 brought together to form the central column of the TF magnet.

Comparing Figure 18 to Figure 8, the outer double pancake coils 1802 have approximately 50% more area in their cross section, even accounting for the loss of area due to the cutting of the inclines, and the total cross sectional area of the pancake coils 1801, 1802 in the current carrying element is increased by about 25%. This is a significant increase to the current density of the current carrying element 1800 compared to the current carrying elements 701 of Figure 8. Further shaping of the coils, and/or the addition of more shaped coils (e.g. into one or more gaps 1805) would potentially allow for even further improvements.

Figure 19 shows results of a stress simulation of a cross section 1901 of a TF magnet, showing the windings of HTS tape 1902 of a single pancake coil having a rectangular (i.e. unmodified) cross section. The stress at the radially inner part of the HTS stack 1902 is unacceptably high (over 500 MPa in places, compared to a maximum acceptable compressive stress for commonly available HTS tape of 450 MPa), and would lead to degradation and likely permanent damage to the HTS tape.

Figure 20 shows results of a stress simulation of a cross section 2001 of a TF magnet, showing the windings of HTS tape 2002 of a single pancake coil which has had an incline 2003 cut into it. Comparing this to Figure 19, it can be seen that the stress is considerably reduced - being less than 330 MPa throughout the structure.

The coils 1802, 2002 (and the HTS field coils 1000, 1100, 1200 described above) can be cut and shaped by essentially any suitable method for cutting metal or metal composites, e.g. electrical discharge machining (EDM), grinding, sanding, etching, laser cutting, plasma cutting, water jet cutting, etc. Shaping methods which generate significant heat may cause local degradation of the HTS material close to the cut and HTS material will permanently degrade if it is brought above a degradation temperature, which depends on the exact HTS material and manufacturer, but is generally on the order of 150 to a few hundred degrees centigrade. This degradation can be mitigated or avoided by providing suitable cooling (e.g. water cooling) as the coils are cut/shaped. In addition, the high thermal conductivity of a partially insulated coil (particularly if solder potted) means that it acts as an effective heat sink during the cutting process. EDM may be preferred in many case as it can minimise damage imparted to the tapes, and is readily adaptable to produce curved geometries by appropriate shaping of the electrodes used to create the discharge. Combinations of these methods can also be employed as required. For example, the bulk of the material may be removed by one method (which may be referred to as a "roughing" process) that may damage the axial edge of the HTS tapes, and another method (which may be termed a "finishing" method) used to remove the damaged material remaining after the roughing process.

In general, an HTS coil will be particularly suited for cutting and shaping as described above if the coil is:
- non-insulated or partially insulated, i.e. is constructed such that current can be shared radially between the turns of the coil, over substantially all of their length (e.g. including coils with regularly spaced radial current paths);
- potted, e.g. in solder or epoxy - i.e. immersed in a material which will then harden to provide additional structure (and, if conductive, additional current paths) to the coil.

The coil can then be cut as described above to form any desired shape, provided that, once cut, there is at least one current path around the windings of the coil, i.e. from a radially outermost end of the HTS tape (cable) to a radially innermost end of the HTS tape.

While the above examples have been directed towards TF coils in tokamaks, it will be appreciated that the technique of cutting and shaping HTS coils may be applied to any application of HTS coils, and is particularly useful in applications where the space available for the coils is limited and/or irregularly shaped, e.g. in aircraft and/or spacecraft. Also, while the above description has focussed on pancake coils, the method applies equally to other partially- or non-insulated coil constructions, e.g. jointed coils.

A further advantage to shaping HTS field coils as described above is that greater control over the magnetic fields produced by the coils is possible. Figure 21 shows a contour plot of the magnitude of a magnetic field produced close to the central column 2100 of a TF magnet comprising 12 TF coils 2101 of rectangular cross section. Whilst the magnetic field away from the central column 2100 is essentially circularly symmetric, the magnetic field close to and within the central column 2100 has a high level of "ripple" (i.e. lack of symmetry). Shaping the coils 2101 to be "wedge shaped" allows them to be packed together more closely, which significantly reduces the ripple. Use of shaped coils 2101 as described herein is not limited to the central column of a tokamak, but may also include other types of plasma chambers (e.g. stellarators) or apparatus for generating a precisely controlled magnetic field, such as MRI machines, NMR spectrometers and charged particle accelerators.

Figure 22 is a flowchart of a method of manufacturing an HTS coil. In step 2201, a partially insulated coil is formed, e.g. by winding an HTS cable and a partially insulating layer around a former. In step 2202, the resulting coil is then potted, e.g. in solder or epoxy. In step 2203, the coil is machined into the desired shape by the removal of material, including HTS material, such that after shaping there is a current path around the coil.

Figure 23 is a flowchart of a method of manufacturing a TF magnet comprising a plurality of HTS field coils for use in a tokamak plasma chamber. The method comprises:
- Step 2301: manufacturing a plurality of HTS field coils according to the methods described above by removing material from an axial edge (or edges) of the coil . Each of the HTS field coils (which may be D-shaped coils, e.g. as shown in Figure 3) comprises a section (such as the "busbars" 311 shown in Figure 3) for installing into a respective sector of a central column of the TF magnet (such as a current carrying assembly 701 as shown in Figures 7 and 8). The material is removed from the axial edge of the HTS tapes of each HTS field coil to adapt the cross section of the section of the HTS field coil to the cross section of the sector;
- Step 2302: installing the section of each HTS field coil into its respective sector; and
- Step 2303: arranging the sectors about a central axis to form the central column of the TF magnet. The windings within the sections of the HTS field coils installed into the sectors are arranged parallel to the central axis.

For example, although the coils above have been described as having HTS tapes 100 arranged in a "type-0" configuration, other configurations can also be used, e.g. "type-1" and "type-2" (as described, for example, in WO2018/078326 A1).

Similarly, while the disclosure is exemplified with reference to "pancake" coils, i.e. largely planar coils formed of nested concentric windings, it will be understood from the discussion above that the disclosure is not limited to such coils. Similarly, although the above description refers to ReBCO tapes 100, other types of HTS tape that are constructed with one or more insulating (or partially insulating) buffer layers can be used instead of, or in addition to, ReBCO tapes 100. Properties of the buffer layer stack, such as composition of the layers and/or the thickness of the layers may also be varied in order to make the coils insulating or partially insulating. For example, the buffer layer may consist of or comprise a semiconductor material, such as silicon and/or gallium arsenide. In some cases, the buffer layer stack may consist of or comprise one or more metal-insulator transition (MIT) materials, such as vanadium oxide (e.g. VO, V₂O₃, V₃O₅, V₄O₇, V₅O₉, etc.), to provide a turn-to-turn resistance that can be varied by based on a metal to insulator phase transition within the material, e.g. as a result of changing the temperature of the material.

The HTS field coils described above (or, equivalently, HTS field coils manufactured according to the above methods), are particularly advantageous for use in aerospace applications. For example, the HTS field coils may be included in aircraft, unmanned aerial vehicles, satellites, spacecraft, rocket-propelled vehicles, and autonomous exploration vehicles. In such (and other) applications, removing material from an axial edge of the one or more of the HTS tapes allows the shape of the coil to be adapted so that it takes up less volume and is lighter. This is particularly beneficial for technologies in which there are space and weight constraints, such as in satellites. Buffer layer insulated HTS field coils are also advantageous in this regard because they are able to provide partially insulated (PI) or fully insulated coils without requiring additional layers of insulating material to be introduced between the windings, therefore further reducing the volume/weight of the coils. In addition, because the HTS tapes are generally unmodified when the HTS field coils are wound (with the material then being removed after winding), it is possible to form tightly wound, consolidated coils, which are able to withstand large forces, such as those generated during take-off of an aircraft or launch of a satellite and so forth. By contrast, producing HTS field coils with a high degree of mechanical stability is generally more difficult using other manufacturing methods in which material is removed from the HTS tapes before the coil is wound, or which require additional layers to be introduced between the windings.

HTS field coils may, in general, be provided to generate a magnetic field that has a particular strength and spatial distribution. However, in some cases, it is possible to remove material from the axial edge of the one or more of the HTS tapes to reduce the size and mass of the coil, whilst largely preserving the strength and/or spatial distribution generated by the coil. The amount and/or location of the material to be removed may be determined by trial and error, or preferably from computer simulations (e.g. finite element models) of the coils and their associated magnetic field. In the latter case, evolutionary or genetic algorithms may be used to optimise the removal of the material. These algorithms may, for example, be subject to one or more constraints (e.g. acceptable tolerances) relating to the strength and spatial distribution of the magnetic field and/or the operating parameters of the coil, such as current and temperature.

The shape of the HTS field coils may also (or alternatively) be varied by removing material from the HTS tapes to obtain a particular current distribution within the tapes when the coil is in use. For example, the material may be removed from the HTS tapes (e.g. by machining the coil), so that the ratio of the current to the critical current (I/ I_{C}) is approximately constant for a particular region of the coil or throughout the coil. This kind of optimisation may reduce the "excess" current (i.e. the current exceeding the critical current) and allow the coil to be operated in a "saturated" mode in which the current is substantially equal to the critical current to minimise resistive heating within the coil. An example of this type of optimisation is an HTS pancake coil that has been divided into two or more HTS field coils of reduced width, i.e. reduced extent along the axis of the coil (see the discussion above of reduced width HTS field coils), e.g. by "wire slicing" a pancake coil into two smaller (reduced width) pancake coils. A further benefit associated with coils manufactured this way is that the electrical current required from a power supply is reduced, thereby allowing a smaller and/or lighter power supply and non-superconducting current carrying components to be used. The reduced power consumption of the HTS field coils may also extend the lifetime of the power supply, which may be an electrochemical cell (battery), for example.

As will be appreciated by a skilled person, the technique used for removing material from an HTS field coil may, in some cases, be selected depending on the application for which the HTS coil is to be used. Generally, however, any of the techniques described above can be used, such as EDM, grinding, sanding, etching, laser cutting, plasma cutting, water jet cutting, chemically removing the material, etc.

## Claims

1. A method of manufacturing a High Temperature Superconductor, HTS, field coil (1100, 1400) from one or more HTS tapes (100, 900, 900A,B, 1401, 1501A-D), each HTS tape comprising a flexible substrate, an intermediate layer (102) provided on a face of the flexible substrate, an HTS material layer (103) provided on the intermediate layer, and electrically conductive cladding (104, 105) in electrical contact with the HTS material and extending across at least the edges of the HTS tape, the method comprising:
winding (2201) the one or more HTS tapes about an axis (Z) to form a field coil (1000, 1300) comprising windings (1002, 1004) of HTS tape; and
**characterised by**:
after winding, removing (2203) material from an axial edge of the one or more of the HTS tapes around at least a part of one or more of the windings to reduce the extent of the one or more HTS tapes along the axis of the field coil, wherein removing material from an axial edge of the one or more of the HTS tapes comprises partially or wholly removing the cladding from an edge of the one or more of the HTS tapes around at least a part of one or more of the windings to increase the electrical resistance between the HTS material layer in the winding and the HTS material layer in an adjacent winding.

2. A method according to claim 1, wherein removing (2203) material from the axial edge of the one or more HTS tapes (100, 900, 900A,B, 1401, 1501A-D) comprises reducing an extent of the HTS material layer (103) along the axis of the field coil (1000, 1300).

3. A method according to claim 1 or 2, wherein removing the cladding (104, 105) from the edge of one or more of the HTS tapes (100, 900, 900A,B, 1401, 1501A-D) comprises removing the cladding to expose the HTS material layer at an axial edge of the one or more of the HTS tapes around the at least a part of one or more of the windings.

4. A method according to any one of the preceding claims, wherein the material is removed from the edge of the one or more HTS tapes (100, 900, 900A,B, 1401, 1501A-D) across a whole of a face of the field coil (1000, 1300).

5. A method according to any one of the preceding claims, further comprising sealing the edge of the one or more of the HTS tapes (100, 900, 900A,B, 1401, 1501A-D) with an insulator or conductor material.

6. A method according to any one of the preceding claims, and comprising cooling the HTS field coil (1000, 1300) during the step of removing the material from the axial edge of the one or more HTS tapes (100, 900, 900A,B, 1401, 1501A-D).

7. A method according to any one of the preceding claims, and comprising, before removing material from the axial edge of the one or more of the HTS tapes (100, 900, 900A,B, 1501A-D), potting the field coil (1000, 1300).

8. A method according to any one of the preceding claims, wherein removing the material comprises cutting through the HTS field coil (1000, 1300) to divide the HTS field coil into two or more HTS field coils (1100, 1400).

9. A method according to any one of the preceding claims, wherein winding the one or more HTS tapes (100, 900, 900A,B, 1401, 1501A-D) about an axis to form a field coil (1100, 1400) comprises winding a cable having two outer HTS tapes (1501A,D) of the one or more HTS tapes and one or more internal HTS tapes (1501B,C), the internal HTS tape(s) being arranged between the outer HTS tapes and having metal cladding (104, 105) that provides an electrically conductive pathway between the HTS layers of the two outer HTS tapes.

10. A method according to claim 9, wherein before removal of the material, the extent of the internal HTS tape(s) (1501B,C) along the axis of the coil (1000, 1300) is less than the extent of the external HTS tapes (1501A,D) along the axis (Z) of the coil.

11. A method according to claim 10, wherein before removal of the material, respective axial edges of the internal HTS tape(s) (1501B,C) and the outer HTS tapes (1501A,D) are aligned with one another along an edge of the cable.

12. A method of manufacturing an electromagnet, the electromagnet comprising a High Temperature Superconductor, HTS, field coil installed within a recess or enclosed space, the method comprising:
manufacturing an HTS field coil (1100, 1400) according to the method of any one of the preceding claims, wherein the step of removing material from the axial edge of the one or more HTS tapes (100, 900, 900A,B, 1401, 1501A-D) of the HTS field coil comprises removing the material to adapt the HTS field coil (1000, 1300) to fit the recess or enclosed space; and
installing the HTS field coil (1100, 1400) into the recess or enclosed space.

13. A method of manufacturing a toroidal field, TF, magnet comprising a plurality of High Temperature Superconductor, HTS, field coils for use in a tokamak plasma chamber, the method comprising:
manufacturing a plurality of HTS field coils according to the method of any one of the claims 1 to 11, wherein each of the HTS field coils comprises a section for installing into a respective sector of a central column of the TF magnet, and wherein the step of removing material from the axial edge of the one or more HTS tapes (100, 900, 900A,B, 1401, 1501A-D) of each HTS field coil comprises removing the material to adapt a cross-section of the section of the HTS field coil to a cross-section of the sector;
installing the section of each HTS field coil into its respective sector; and
arranging the sectors about a central axis to form the central column of the TF magnet, wherein the windings within the sections of the HTS field coils installed into the sectors are arranged parallel to the central axis.

14. A High Temperature Superconductor, HTS, field coil manufactured according to the method of any one of claims 1 to 11.

15. An HTS field coil according to claim 14 and comprising electrical insulator material provided on one or more axial edges of the one or more HTS tapes (100, 900, 900A,B, 1401, 1501A-D).

## Patentansprüche

1. Verfahren zum Herstellen einer Hochtemperatur-Supraleiter-(HTS-)Feldspule (1100, 1400) aus einem oder mehreren HTS-Bändern (100, 900, 900A, B, 1401, 1501A-D), wobei jedes HTS-Band ein flexibles Substrat, eine auf einer Fläche des flexiblen Substrats vorgesehene Zwischenschicht (102), eine auf der Zwischenschicht vorgesehene HTS-Materialschicht (103) und eine elektrisch leitende Plattierung (104, 105) umfasst, die in elektrischem Kontakt mit dem HTS-Material ist und sich über mindestens die Kanten des HTS-Bands erstreckt, wobei das Verfahren Folgendes umfasst:
Wickeln (2201) des einen oder der mehreren HTS-Bänder um eine Achse (Z), um eine Feldspule (1000, 1300) zu bilden, die Wicklungen (1002, 1004) aus HTS-Band umfasst; und
**gekennzeichnet durch**:
nach dem Wickeln, Entfernen (2203) von Material von einer axialen Kante des einen oder der mehreren HTS-Bänder um mindestens einen Teil von einer oder mehreren der Wicklungen, um die Ausdehnung des einen oder der mehreren HTS-Bänder entlang der Achse der Feldspule zu verringern, wobei das Entfernen von Material von einer axialen Kante des einen oder der mehreren der HTS-Bänder ein partielles oder vollständiges Entfernen der Plattierung von einer Kante des einen oder der mehreren der HTS-Bänder um mindestens einen Teil von einer oder mehreren der Wicklungen umfasst, um den elektrischen Widerstand zwischen der HTS-Materialschicht in der Wicklung und der HTS-Materialschicht in einer angrenzenden Wicklung zu erhöhen.

2. Verfahren nach Anspruch 1, wobei das Entfernen (2203) von Material von der axialen Kante des einen oder der mehreren HTS-Bänder (100, 900, 900A,B, 1401, 1501A-D) ein Verringern einer Ausdehnung der HTS-Materialschicht (103) entlang der Achse der Feldspule (1000, 1300) umfasst.

3. Verfahren nach Anspruch 1 oder 2, wobei das Entfernen der Plattierung (104, 105) von der Kante von einem oder mehreren der HTS-Bänder (100, 900, 900A, B, 1401, 1501A-D) ein Entfernen der Plattierung zum Freilegen der HTS-Materialschicht an einer axialen Kante des einen oder der mehreren der HTS-Bänder um den mindestens einen Teil von einer oder mehreren der Wicklungen umfasst.

4. Verfahren nach einem der vorhergehenden Ansprüche, wobei das Material von der Kante des einen oder der mehreren HTS-Bänder (100, 900, 900A, B, 1401, 1501A- D) über eine Gesamtheit einer Fläche der Feldspule (1000, 1300) entfernt wird.

5. Verfahren nach einem der vorhergehenden Ansprüche, ferner umfassend ein Abdichten der Kante des einen oder der mehreren der HTS-Bänder (100, 900, 900A, B, 1401, 1501A-D) mit einem Isolier- oder Leitermaterial.

6. Verfahren nach einem der vorhergehenden Ansprüche und umfassend ein Kühlen der HTS-Feldspule (1000, 1300) während des Schritts des Entfernens des Materials von der axialen Kante des einen oder der mehreren HTS-Bänder (100, 900, 900A, B, 1401, 1501A-D).

7. Verfahren nach einem der vorhergehenden Ansprüche, umfassend vor dem Entfernen von Material von der axialen Kante des einen oder der mehreren der HTS-Bänder (100, 900, 900A, B, 1501A-D) ein Vergießen der Feldspule (1000, 1300).

8. Verfahren nach einem der vorhergehenden Ansprüche, wobei das Entfernen des Materials ein Schneiden durch die HTS-Feldspule (1000, 1300) umfasst, um die HTS-Feldspule in zwei oder mehr HTS-Feldspulen (1100, 1400) zu unterteilen.

9. Verfahren nach einem der vorhergehenden Ansprüche, wobei das Wickeln des einen oder der mehreren HTS-Bänder (100, 900, 900A,B, 1401, 1501A-D) um eine Achse, um eine Feldspule (1100, 1400) zu bilden, ein Wickeln eines Kabels mit zwei äußeren HTS-Bändern (1501A,D) des einen oder der mehreren HTS-Bänder und einem oder mehreren inneren HTS-Bändern (1501B, C) umfasst, wobei das innere bzw. die inneren HTS-Bänder zwischen den äußeren HTS-Bändern angeordnet sind und eine Metallplattierung (104, 105) aufweisen, die einen elektrisch leitenden Weg zwischen den HTS-Schichten der zwei äußeren HTS-Bänder bereitstellt.

10. Verfahren nach Anspruch 9, wobei vor dem Entfernen des Materials die Ausdehnung des bzw. der inneren HTS-Bänder (1501B, C) entlang der Achse der Spule (1000, 1300) geringer als die Ausdehnung der äußeren HTS-Bänder (1501A, D) entlang der Achse (Z) der Spule ist.

11. Verfahren nach Anspruch 10, wobei vor dem Entfernen des Materials jeweilige axiale Kanten des bzw. der inneren HTS-Bänder (1501B, C) und der äußeren HTS-Bänder (1501A, D) entlang einer Kante des Kabels aufeinander ausgerichtet sind.

12. Verfahren zum Herstellen eines Elektromagneten, wobei der Elektromagnet eine Hochtemperatur-Supraleiter-(HTS-)Feldspule umfasst, die innerhalb einer Aussparung oder eines geschlossenen Raums installiert ist, wobei das Verfahren Folgendes umfasst:
Herstellen einer HTS-Feldspule (1100, 1400) gemäß dem Verfahren nach einem der vorhergehenden Ansprüche, wobei der Schritt des Entfernens von Material von der axialen Kante des einen oder der mehreren HTS-Bänder (100, 900, 900A, B, 1401, 1501A-D) der HTS-Feldspule ein Entfernen des Materials umfasst, um die HTS-Feldspule (1000, 1300) so anzupassen, dass sie in die Aussparung oder den geschlossenen Raum passt; und
Installieren der HTS-Feldspule (1100, 1400) in die Aussparung oder den geschlossenen Raum.

13. Verfahren zur Herstellung eines Ringfeld-(RF-)Magneten, umfassend eine Vielzahl von Hochtemperatur-Supraleiter-(HTS-)-Feldspulen zur Verwendung in einer Tokamak-Plasmakammer, wobei das Verfahren Folgendes umfasst:
Herstellen einer Vielzahl von HTS-Feldspulen gemäß dem Verfahren nach einem der Ansprüche 1 bis 11, wobei jede der HTS-Feldspulen einen Abschnitt zum Installieren in einen jeweiligen Sektor einer Mittelsäule des RF-Magneten umfasst, und wobei der Schritt des Entfernens von Material von der axialen Kante des einen oder der mehreren HTS-Bänder (100, 900, 900A,B, 1401, 1501A- D) jeder HTS-Feldspule ein Entfernen des Materials umfasst, um einen Querschnitt des Abschnitts der HTS-Feldspule an einen Querschnitt des Sektors anzupassen;
Installieren des Abschnitts jeder HTS-Feldspule in seinen jeweiligen Sektor; und
Anordnen der Sektoren um eine Mittelachse, um die Mittelsäule des RF-Magneten zu bilden, wobei die Wicklungen innerhalb der Abschnitte der in die Sektoren installierten HTS-Feldspulen parallel zur Mittelachse angeordnet sind.

14. Hochtemperatur-Supraleiter-(HTS-)Feldspule, die gemäß dem Verfahren nach einem der Ansprüche 1 bis 11 hergestellt ist.

15. HTS-Feldspule nach Anspruch 14, umfassend ein elektrisches Isoliermaterial, das auf einer oder mehreren axialen Kanten des einen oder der mehreren HTS-Bänder (100, 900, 900A, B, 1401, 1501A-D) vorgesehen ist.

## Revendications

1. Procédé de fabrication d'une bobine de champ supraconductrice à haute température, HTS, (1100, 1400) à partir d'un ou plusieurs rubans HTS (100, 900, 900A, B, 1401, 1501A-D), chaque ruban HTS comprenant un substrat souple, une couche intermédiaire (102) prévue sur une face du substrat souple, une couche de matériau HTS (103) prévue sur la couche intermédiaire, et un revêtement électriquement conducteur (104, 105) en contact électrique avec le matériau HTS et s'étendant au moins sur les bords du ruban HTS, le procédé comprenant :
l'enroulement (2201) des un ou plusieurs rubans HTS autour d'un axe (Z) pour former une bobine de champ (1000, 1300) comprenant des enroulements (1002, 1004) du ruban HTS ; et
**caractérisé par** :
après l'enroulement, l'enlèvement (2203) du matériau d'un bord axial des un ou plusieurs des rubans HTS autour d'au moins une partie d'un ou plusieurs des enroulements pour réduire l'étendue des un ou plusieurs rubans HTS le long de l'axe de la bobine de champ, l'enlèvement du matériau d'un bord axial des un ou plusieurs rubans HTS comprenant l'enlèvement partiel ou total du revêtement d'un bord des un ou plusieurs des rubans HTS autour d'au moins une partie d'un ou plusieurs des enroulements pour accroître la résistance électrique entre la couche de matériau HTS de l'enroulement et la couche de matériau HTS d'un enroulement adjacent.

2. Procédé selon la revendication 1, dans lequel l'enlèvement (2203) du matériau du bord axial des un ou plusieurs rubans HTS (100, 900, 900A, B, 1401, 1501A-D) comprend la réduction d'une étendue de la couche de matériau HTS (103) le long de l'axe de la bobine de champ (1000, 1300).

3. Procédé selon la revendication 1 ou 2, dans lequel l'enlèvement du revêtement (104, 105) du bord d'un ou plusieurs des rubans HTS (100, 900, 900A, B, 1401, 1501A-D) comprend l'enlèvement du revêtement pour exposer la couche de matériau HTS au niveau d'un bord axial des un ou plusieurs des rubans HTS autour de l'au moins une partie d'un ou plusieurs des enroulements.

4. Procédé selon l'une quelconque des revendications précédentes, dans lequel le matériau est enlevé du bord des un ou plusieurs rubans HTS (100, 900, 900A, B, 1401, 1501A-B) sur la totalité d'une face de la bobine de champ (1000, 1300).

5. Procédé selon l'une quelconque des revendications précédentes, comprenant en outre l'étanchéisation du bord des un ou plusieurs rubans HTS (100, 900, 900A, B, 1401, 1501A-D) avec un matériau isolant ou conducteur.

6. Procédé selon l'une quelconque des revendications précédentes, et comprenant le refroidissement de la bobine de champ HTS (1000, 1300) pendant l'étape d'enlèvement du matériau du bord axial des un ou plusieurs rubans HTS (100, 900, 900A, B, 1401, 1501AD).

7. Procédé selon l'une quelconque des revendications précédentes, et comprenant, avant l'enlèvement d'un matériau du bord axial des un ou plusieurs des rubans HTS (100, 900, 900A, B, 1501A-D), l'enrobage de la bobine de champ (1000, 1300).

8. Procédé selon l'une quelconque des revendications précédentes, dans lequel l'enlèvement du matériau comprend un découpage à travers la bobine de champ HTS (1000, 1300) pour diviser la bobine de champ HTS en deux bobines de champ HTS (1100, 1400) ou plus.

9. Procédé selon l'une quelconque des revendications précédentes, dans lequel l'enroulement des un ou plusieurs rubans HTS (100, 900, 900A, B, 1401, 1501A-D) autour d'un axe pour former une bobine de champ (1100, 1400) comprend l'enroulement d'un câble présentant deux rubans HTS externes (1501A, D) des un ou plusieurs rubans HTS et un ou plusieurs rubans HTS internes (1501B, C), le ou les rubans HTS internes étant agencés entre les rubans HTS externes et présentant un revêtement métallique (104, 105) qui fournit une voie électriquement conductrice entre les couches HTS des deux rubans HTS externes.

10. Procédé selon la revendication 9, dans lequel avant l'enlèvement du matériau, l'étendue du ou des rubans HTS internes (1501B, C) le long de l'axe de la bobine (1000, 1300) est inférieure à l'étendue des rubans HTS externes (1501A, D) le long de l'axe (Z) de la bobine.

11. Procédé selon la revendication 10, dans lequel avant l'enlèvement du matériau, des bords axiaux respectifs du ou des rubans HTS internes (1501B, C) et des rubans HTS externes (1501A, D) sont alignés les uns avec les autres le long d'un bord du câble.

12. Procédé de fabrication d'un électroaimant, l'électroaimant comprenant une bobine de champ supraconductrice à haute température, HTS, installée au sein d'un évidement ou d'un espace clos, le procédé comprenant :
la fabrication d'une bobine de champ HTS (1100, 1400) selon le procédé de l'une quelconque des revendications précédentes, dans lequel l'étape d'enlèvement de matériau du bord axial des un ou plusieurs rubans HTS (100, 900, 900A, B, 1401, 1501A-D) de la bobine de champ HTS comprend l'enlèvement du matériau pour adapter la bobine de champ HTS (1000, 1300) pour qu'elle s'ajuste dans l'évidement ou l'espace clos ; et
l'installation de la bobine de champ HTS (1100, 1400) dans l'évidement ou l'espace clos.

13. Procédé de fabrication d'un aimant à champ toroïdal, TF, comprenant une pluralité de bobines de champ supraconductrices à haute température, HTS, pour une utilisation dans une chambre à plasma de tokamak, le procédé comprenant :
la fabrication d'une pluralité de bobines de champ HTS selon le procédé selon l'une quelconque des revendications 1 à 11, dans lequel chacune des bobines de champ HTS comprend une section destinée à être installée dans un secteur respectif d'une colonne centrale de l'aimant TF, et dans lequel l'étape d'enlèvement de matériau du bord axial des un ou plusieurs rubans HTS (100, 900, 900A, B, 1401, 1501A-D) de chaque bobine de champ HTS comprend l'enlèvement du matériau pour adapter une section transversale de la section de la bobine de champ HTS à une section transversale du secteur ;
l'installation de la section de chaque bobine de champ HTS dans son secteur respectif ; et
l'agencement des secteurs autour d'un axe central pour former la colonne centrale de l'aimant TF, les enroulements présents au sein des sections des bobines de champ HTS installées dans les secteurs étant agencés parallèlement à l'axe central.

14. Bobine de champ supraconductrice à haute température, HTS, fabriquée selon le procédé selon l'une quelconque des revendications 1 à 11.

15. Bobine de champ HTS selon la revendication 14 et comprenant un matériau isolant électrique prévu sur un ou plusieurs bords axiaux des un ou plusieurs rubans HTS (100, 900, 900A, B, 1401, 1501A-D).
